# EUROPÄISCHE PATENTANMELDUNG

(11) **EP 4 759 207 A1**
(43) Veröffentlichungstag der Anmeldung: **17.06.2026**
(21) Anmeldenummer: 24219898.4
(22) Anmeldetag: 13.12.2024
(51) Int. Cl.: A47J 31/52, A47J 31/60

(54) **GETRÄNKEAUTOMAT MIT EINER STEUEREINHEIT UND EINER UHR**

(71) Anmelder: JURA ELEKTROAPPARATE AG, 4626 Niederbuchsiten (CH)
(72) Erfinder: GROB, Christoph, 4800 Zofingen (CH); BÜRGLER, Christian, 5600 Lenzburg (CH)
(74) Vertreter: Mertzlufft-Paufler, Cornelius

(57) **Zusammenfassung**

Die Erfindung betrifft insbesondere einen Getränkeautomaten (1), der eine Steuereinheit (2) und eine Uhr (3) aufweist, die signalübertragend miteinander verbunden sind. Über die Uhr (3) ist ein Aktionszeitpunkt (5) bestimmbar, zu dem die Steuereinheit (2) einen vordefinierten Programmablauf (4) durchführt

## Beschreibung

Die Erfindung betrifft einen Getränkeautomaten mit einer Steuereinheit, die dazu eingerichtet ist, einen vordefinierten Programmablauf durchzuführen, und einer Uhr, die mit der Steuereinheit signalübertragend verbunden ist. Solche Getränkeautomaten sind in der Praxis bekannt.

Die Erfindung betrifft weiter ein Verfahren zum Betreiben eines Getränkeautomaten. Derartige Verfahren sind in der Praxis bekannt.

Der Erfindung liegt die Aufgabe zu Grunde, einen Betrieb von Getränkeautomaten, insbesondere von Kaffeevollautomaten, zu verbessern.

Zur Lösung dieser Aufgabe schlägt die Erfindung die Merkmale von Anspruch 1 vor. Insbesondere wird somit bei einem Getränkeautomaten der eingangs beschriebenen Art vorgeschlagen, dass über die Uhr ein Aktionszeitpunkt, zu dem die Steuereinheit den vordefinierten Programmablauf durchführt, bestimmbar ist. Hierdurch kann ein Betrieb des Getränkeautomaten in zeitlicher Hinsicht besser geplant und und/oder überwacht werden.

"Bestimmbar" kann hierbei beispielsweise "vorgebbar" und/oder "messbar" bedeuten.

"Vorgebbar" kann beispielsweise bedeuten, dass über die Uhr ein Aktionszeitpunkt vorgebbar ist, zu dem die Steuereinheit den Programmablauf durchführt. Dies kann beispielsweise einerseits bedeuten, dass der Aktionszeitpunkt absolut vorgebbar ist. Dazu kann eine bestimmte Uhrzeit festgelegt werden, zu der der Programmablauf durchgeführt werden soll. Sobald diese Uhrzeit erreicht ist, kann die Uhr ein Signal an die Steuereinheit geben, woraufhin die Steuereinheit den Programmablauf durchführt. Es ist aber andererseits auch denkbar, dass der Aktionszeitpunkt relativ vorgebbar ist. Dazu kann über die Steuereinheit die Uhr so eingestellt werden, dass die Uhr nach dem Ablauf einer bestimmten Zeitspanne - die Zeitspanne könnte in Stunden und/oder Minuten vorgebbar sein - ein Signal an die Steuereinheit gibt, woraufhin die Steuereinheit den Programmablauf durchführt.

Wird der Aktionszeitpunkt in diesem Sinne vorgegeben, so erfolgt dies bevorzugt außerhalb eines Pseudo-Aus-Zustands.

"Messbar" kann beispielsweise bedeuten, dass der Aktionszeitpunkt, zu dem der Programmablauf durchgeführt wird, von der Uhr gemessen wird. Dies kann einerseits bedeuten, dass der Aktionszeitpunkt absolut messbar ist. Beispielsweise kann gemessen werden, zu welcher genauen Uhrzeit ein bestimmter Wartungs- oder Reinigungsvorgang oder eine bestimmte Getränkeausgabe durchgeführt wird. Andererseits kann der Aktionszeitpunkt aber auch relativ messbar sein. Dies kann bedeuten, dass messbar sein kann, welche Zeitspanne beispielsweise zwischen zwei Wartungs- oder Reinigungsvorgängen, zwischen zwei Getränkebezügen und/oder zwischen einem Getränkebezug und einem Wartungs- oder Reinigungsvorgang vergangen ist.

Durch diese erfindungsgemäße Ausgestaltung ist die Uhr des Getränkeautomaten besonders vielseitig einsetzbar, da sowohl Aktionszeitpunkte vorgegeben als auch gemessen werden können.

Bevorzugt handelt es sich bei dem Getränkeautomaten um einen Kaffeevollautomaten. Damit können die beschriebenen Vorteile bei einem Kaffeeautomaten genutzt werden.

Besonders bevorzugt ist die Uhr eine Echtzeituhr, also eine sogenannte "real time clock" (RTC). Durch die Echtzeituhr können besonders präzise Zeitmessungen durchgeführt werden. Zudem verfügt eine Echtzeituhr über eine eigene Batterie. Hierdurch kann die Echtzeituhr über mehrere Jahre hinweg die aktuelle, exakte Uhrzeit beibehalten. Es ist aber auch denkbar, als Uhr einen Mikrochip, beispielsweise einen Timer-IC, zu verwenden. Gegenüber einer Echtzeituhr kann ein Timer-IC den Vorteil haben, dass dieser häufig günstiger ist als eine Echtzeituhr.

Ein Programmablauf im Sinne der Erfindung kann beispielsweise eine Folge von zwei oder mehr Verfahrensschritten sein. Beispielsweise kann ein Programmablauf die Zubereitung eines Getränks, beispielsweise eines Kaffeegetränks, betreffen. Ein Programmablauf kann aber auch einen Wartungs- oder Reinigungsvorgang betreffen, beispielsweise einen Spülvorgang und/oder einen Entkalkungsvorgang. Durch das Vordefinieren von unterschiedlichen Programmabläufen kann der Getränkeautomat besonders vielseitig und autonom einsetzbar sein.

Ein "Vordefinieren" kann hierbei zum Beispiel ein "Einprogrammieren" und/oder ein "Einrichten" umfassen. Beispielsweise kann ein Benutzer des Getränkeautomaten über eine Benutzerschnittstelle des Getränkeautomaten, beispielsweise über einen Touchscreen, oder über ein mobiles Endgerät, beispielsweise ein Smartphone, das mit der Steuereinheit verbunden ist, einen Programmablauf in die Steuereinheit einprogrammieren und/oder eingeben. Auch kann, wenn der Aktionszeitpunkt vorgegeben wird, der Aktionszeitpunkt über die Benutzerschnittstelle vom Benutzer eingegeben werden.

Über die Uhr können auch mehrere, verschiedene Aktionszeitpunkte bestimmbar sein, zu denen unterschiedliche vordefinierte Programmabläufe durchgeführt werden.

Die Uhr kann mit der Steuereinheit signalübertragend beispielsweise über ein Kabel oder auch kabellos, beispielsweise über eine Funkverbindung, verbunden sein.

Bei einer vorteilhaften Ausgestaltung kann vorgesehen sein, dass der Getränkeautomat dem Aktionszeitpunkt zeitlich vorgelagert in einem Pseudo-Aus-Zustand ist. Dies kann eine Energieeffizienz des Getränkeautomaten verbessern.

Hierbei kann vorgesehen sein, dass der vordefinierte Programmablauf in dem Pseudo-Aus-Zustand nicht vollständig ausführbar ist (sondern zum Beispiel ein Aufwecken von Funktionen erfordert).

Der Pseudo-Aus-Zustand kann ein Energiesparmodus und/oder ein Standby-Modus und/oder ein Bereitschaftszustand sein, in dem ein Energieverbrauch des Getränkeautomaten kleiner ist als in einem normalen Betriebszustand.

Ein Pseudo-Aus-Zustand kann beispielsweise auch als ein Zustand charakterisiert werden, bei dem ein Energieverbrauch reduziert ist, um eine Versorgung netzunabhängig über einen längeren Zeitraum zu ermöglichen, ohne dass der Getränkeautomat ganz ausgeschaltet ist. Der Pseudo-Aus-Zustand kann also eine Netztrennung zulassen oder vorsehen, die aber vom Getränkeautomaten selbsttätig aufgehoben werden kann. Der Pseudo-Aus-Zustand führt daher während der Netztrennung eine gewollte Grundfunktionalität aus. Der Pseudo-Aus-Zustand kann sich somit von einem Pseudo-Aus-Zustand unterscheiden, bei dem die Netzspannung nie getrennt wird und ein Verbrauch durch funktionslose Blindströme auftritt.

Diese Ausgestaltung kann beispielsweise dann von Vorteil sein, wenn als Aktionszeitpunkt ein Zeitpunkt vorgegeben wird, zu dem ein Programmablauf durchgeführt wird, bei dem ein Getränk, beispielsweise ein Kaffee, ausgegeben werden soll. Beispielsweise kann dieser Zeitpunkt früh am Morgen liegen. Dadurch dass der Getränkeautomat sich dem Aktionszeitpunkt zeitlich vorgelagert in dem Pseudo-Aus-Zustand befindet, kann über Nacht der Energieverbrauch des Getränkeautomaten reduziert werden. In diesem Fall kann zudem vorgesehen sein, dass die Uhr bei einem Erreichen des vorgegebenen Aktionszeitpunktes ein Signal an die Steuereinheit gibt, woraufhin der Getränkeautomat aus dem Pseudo-Aus-Zustand gestartet wird. Somit kann zu einer vorgegebenen Uhrzeit, also dem Aktionszeitpunkt, der durch die Uhr bestimmt wird, ein Getränk von dem Getränkeautomaten ausgegeben werden.

Es ist auch denkbar, dass zu dem Aktionszeitpunkt als Programmablauf eine Reinigung des Getränkeautomaten durchgeführt wird. Somit kann eingestellt werden, dass Reinigungsvorgänge außerhalb einer normalen Benutzungszeit des Getränkeautomaten, zum Beispiel am Wochenende, durchgeführt werden. Damit der Getränkeautomat bis zu dem entsprechenden Aktionszeitpunkt aber nicht zu viel Energie verbraucht, kann hierdurch der Getränkeautomat vor der Reinigung in dem Pseudo-Aus-Zustand sein.

Bei einer weiteren vorteilhaften Ausgestaltung kann vorgesehen sein, dass die Steuereinheit dazu eingerichtet ist, bei einem Startvorgang des Getränkeautomaten aus dem Pseudo-Aus-Zustand eine voreingestellte Standardroutine zu überspringen. Hierdurch kann gewährleistet werden, dass die Standardroutine nicht mit dem vordefinierten Programmablauf kollidiert.

Beispielsweise werden üblicherweise bei einem Starten eines Getränkeautomaten aus einem Pseudo-Aus-Zustand diverse Standardroutinen durchgeführt, die unter anderem Spülvorgänge umfassen können. Wenn also beispielsweise der vordefinierte Programmablauf die Ausgabe eines Getränks ist und sich der Getränkeautomat dem Aktionszeitpunkt zeitlich vorgelagert in einem Pseudo-Aus-Zustand befindet, könnte es vorkommen, dass in eine vom Benutzer bereitgestellte Tasse vom Getränkeautomaten nicht nur das gewünschte Getränk eingegossen wird, sondern auch eine aus dem Getränkeautomaten durch die Standardroutine ausgespülte Flüssigkeit. Um dies zu vermeiden, kann gemäß dieser Ausgestaltung die voreingestellte Standardroutine, welche den Spülvorgang umfassen kann, übersprungen werden.

Alternativ wird die voreingestellte Standardroutine modifiziert. Dies kann beispielsweise bedeuten, dass nur solche Teilvorgänge einer Standardroutine durchgeführt werden, die dem Ziel des vordefinierten Programmablaufs nicht entgegenstehen. Betrifft der vordefinierte Programmablauf beispielsweise die Ausgabe eines Getränks, so kann die Standardroutine dahingehend modifiziert werden, dass nur solche Teilvorgänge durchgeführt werden, bei denen keine Spülflüssigkeit in eine vom Benutzer bereitgestellte Tasse gelangt. Somit kann eine Energieeffizienz des Getränkeautomaten verbessert werden, ohne dass dies eine Durchführung des vordefinierten Programmablaufs stört.

Bei einer weiteren vorteilhaften Ausgestaltung kann vorgesehen sein, dass ein unmittelbar nach einem Startvorgang des Getränkeautomaten aus dem Pseudo-Aus-Zustand, beispielsweise dem zuvor beschriebenen Startvorgang, durchzuführender Programmablauf vordefinierbar ist. Hierdurch kann ein Benutzer den gewünschten Programmablauf unmittelbar nach dem Startvorgang durchführen lassen. Zum Beispiel kann der vordefinierbare Programmablauf umfassen, dass ein Getränk ausgegeben wird.

Bevorzugt ist der durchzuführende Programmablauf modifizierbar. Dies kann bedeuten, dass, beispielsweise wenn der durchzuführende Programmablauf eine Reinigungsroutine umfasst, der Programmablauf so modifizierbar ist, dass Spülvorgänge, die normalerweise ein Teil der Reinigungsroutine sind, unterdrückt werden. Ein Durchführen der Spülvorgänge könnte nämlich dazu führen, dass von dem Getränkeautomaten ausgespülte Flüssigkeit in eine an der Getränkeausgabe bereitgestellte Tasse gelangt.

Alternativ kann vorgesehen sein, dass der durchzuführende Programmablauf deaktivierbar ist. Beispielsweise kann eine Standardroutine, beispielsweise eine Reinigungsroutine, komplett deaktivierbar sein. So kann auch vermieden werden, dass sich in einer bereitgestellten Tasse von dem Getränkeautomaten ausgespülte Flüssigkeit sammelt.

Bei einer weiteren vorteilhaften Ausgestaltung kann vorgesehen sein, dass der vordefinierte Programmablauf umfasst, ein Getränk zuzubereiten. Somit kann über die Uhr der Aktionszeitpunkt bestimmt, also vorgegeben oder gemessen werden, zu dem das Getränk zubereitet wird.

Alternativ oder zusätzlich umfasst der Programmablauf, ein Getränk auszugeben. Dies kann bedeuten, dass ein Getränk nicht nur zubereitet wird, sondern auch dem Benutzer des Getränkeautomaten zur Verfügung gestellt, zum Beispiel in eine bereitgestellte Tasse gegeben wird.

Bei einer weiteren vorteilhaften Ausgestaltung kann vorgesehen sein, dass der vordefinierte Programmablauf umfasst, einen Zeitabstand zu einem vorangegangenen Aktionszeitpunkt zu bestimmen. Hierbei bedeutet "bestimmen": "messen". Dies kann beispielsweise nützlich sein, um den Zeitabstand eines Getränkebezugs zu einem vorangegangenen Getränkebezug zu ermitteln. Auch kann beispielsweise der Abstand zu einer vorangegangenen Wartung oder Reinigung ermittelt werden.

Bevorzugt wird der Zeitabstand von der Steuereinheit mit einem in der Steuereinheit hinterlegten Referenzzeitabstand verglichen. Durch den Referenzzeitabstand kann in der Steuereinheit hinterlegt sein, wie häufig eine Wartung und/oder eine Reinigung und/oder eine Spülung des Getränkeautomaten notwendig ist. Überschreitet der Zeitabstand den Referenzzeitabstand, kann von der Steuereinheit beispielsweise eine Reinigungsroutine durchgeführt werden.

Alternativ oder zusätzlich kann vorgesehen sein, dass bei einem Überschreiten eines Referenzzeitabstands, beispielsweise des zuvor beschriebenen Referenzzeitabstands, durch den Zeitabstand von der Steuereinheit eine Anzeige ausgegeben und/oder eine Aktion ausgelöst wird. Hierdurch können von der Steuereinheit aus den ermittelten Zeitabständen nützliche Informationen ermittelt und an den Benutzer gegeben werden.

Wenn z.B. zu einem Aktionszeitpunkt von einem Benutzer ein Getränk bezogen wird, kann ein Zeitabstand zu einem vorangegangenen Aktionszeitpunkt, zu dem eine Reinigung des Getränkeautomaten durchgeführt worden ist, bestimmt werden. Wenn der ermittelte Zeitabstand den Referenzzeitabstand überschreitet, kann an den Benutzer eine Anzeige ausgegeben werden. Beispielsweise kann angezeigt werden, dass eine Reinigung durchzuführen ist und/oder dass das in einem Wasserbehälter des Getränkeautomaten befindliche Wasser auszuwechseln ist.

Die Anzeige kann über eine Bedienschnittstelle des Getränkeautomaten, beispielsweise über einen Bildschirm, ausgegeben werden. Die Anzeige kann aber auch an ein mobiles Endgerät des Benutzers gegeben werden, das mit der Steuereinheit verknüpft ist.

Alternativ oder zusätzlich kann vorgesehen sein, dass bei einem Überschreiten eines Referenzzeitabstands, beispielsweise des zuvor beschriebenen Referenzzeitabstands, durch den Zeitabstand von der Steuereinheit eine Aktion ausgelöst wird. Die Aktion kann beispielsweise eine Wartung und/oder Reinigung und/oder Spülung des Getränkeautomaten sein. Hierdurch kann sichergestellt werden, dass der Getränkeautomat stets den Hygieneanforderungen genügt.

Bei einer weiteren vorteilhaften Ausgestaltung kann vorgesehen sein, dass der vordefinierte Programmablauf umfasst, eine Reinigungsroutine an dem Getränkeautomaten durchzuführen. Hiermit kann der Aktionszeitpunkt, zu dem die Reinigungsroutine durchgeführt wird, bestimmt, also vorgegeben oder gemessen, werden.

Dies kann einerseits die Benutzerfreundlichkeit des Getränkeautomaten erhöhen, da ein Benutzer den Aktionszeitpunkt vorgeben kann, zu dem die Reinigungsroutine durchgeführt werden soll. Der Benutzer kann den Aktionszeitpunkt so legen, dass die Reinigungsroutine nicht dessen Benutzung des Getränkeautomaten stört.

Andererseits kann aber auch diese Ausgestaltung dazu dienen, die Übersicht über durchgeführte Reinigungsroutinen zu behalten, indem jeder Aktionszeitpunkt gemessen wird, zu dem die Reinigungsroutine durchgeführt worden ist.

Bevorzugt bewirkt die Reinigungsroutine eine Abgabe einer Flüssigkeit an einer Getränkeausgabe. Die Getränkeausgabe kann beispielsweise ein Auslauf des Getränkeautomaten sein, unter den ein Behälter, beispielsweise ein Glas oder eine Tasse, gestellt werden kann. Dadurch dass die Reinigungsroutine die Abgabe der Flüssigkeit bewirkt, können Flüssigkeitsleitungen des Getränkeautomaten durchspült werden. Dies kann die Hygienebedingungen innerhalb des Getränkeautomaten verbessern.

Bei der Flüssigkeit kann es sich beispielsweise um eine Spülflüssigkeit handeln, beispielsweise Wasser, das Ablagerungen aus den Leitungen des Getränkeautomaten und/oder ein Reinigungsmittel enthält.

Bei einer weiteren vorteilhaften Ausgestaltung kann vorgesehen sein, dass der vordefinierte Programmablauf umfasst, den Aktionszeitpunkt in der Steuereinheit zu speichern.

Dies kann eine spätere Datenauswertung von gespeicherten Aktionszeitpunkten ermöglichen, durch die beispielsweise auf den Zustand des Getränkeautomaten geschlossen werden kann, insbesondere auf den Verschleißzustand und/oder auf den Hygienezustand.

Zudem kann diese Ausgestaltung ermöglichen, dass ein Zeitabstand zwischen einem aktuell gemessene Aktionszeitpunkt und einem vorangegangenen Aktionszeitpunkt ermittelt werden kann, der bevorzugt mit einem in der Steuereinheit hinterlegten Referenzzeitabstand verglichen werden kann.

Bei einer weiteren vorteilhaften Ausgestaltung kann vorgesehen sein, dass die Uhr über einen Kondensator elektrisch versorgbar ist. Hierdurch kann die Uhr auch dann elektrisch versorgbar sein, wenn der Getränkeautomat sich in einem Pseudo-Aus-Zustand, beispielsweise einem Standby-Modus oder einen vom Netz getrennten Bereitschaftszustand, befindet. Auch könnte der Getränkeautomat ausgeschaltet sein und trotzdem wäre die Uhr weiter über den Kondensator elektrisch versorgbar. Hierdurch kann die Uhr stets die aktuelle Uhrzeit beibehalten.

Bevorzugt ist die Steuereinheit zu einer Herstellung einer Versorgungsspannung eingerichtet, um den Kondensator aufzuladen. Beispielsweise kann von der Steuereinheit ein Schalter umlegbar sein, um die Versorgungsspannung herzustellen. Hierdurch kann während eines Betriebs des Getränkeautomaten der Kondensator aufgeladen werden, damit der Kondensator die Uhr beispielsweise in einem Pseudo-Aus-Zustand des Getränkeautomaten weiterversorgen kann.

Bei einer weiteren vorteilhaften Ausgestaltung kann vorgesehen sein, dass der Getränkeautomaten eine Kommunikationsschnittstelle aufweist, über die die Steuereinheit mit einem mobilen Endgerät datentechnisch verknüpfbar ist. Damit kann ein Benutzer den Getränkeautomaten komfortabel über sein mobiles Endgerät, beispielsweise über sein Smartphone, bedienen. Dies kann beispielsweise zur Festlegung oder zum Auslesen eines Aktionszeitpunkts erfolgen.

Es kann auch vorgesehen sein, dass der vordefinierte Programmablauf eine Herstellung einer Verbindung zu einem mobilen Endgerät oder einem Server umfasst, um weitere Aktionszeitpunkte und/oder Programmabläufe zu erhalten. Dies kann beispielsweise regelmäßig nachts erfolgen.

Ein vordefinierter Programmablauf kann auch ein Firmware-Update und/oder Übermittlung von Nutzerdaten sein.

Datentechnisch verknüpfbar kann beispielsweise bedeuten, dass die Steuereinheit über das mobile Endgerät programmierbar und/oder bedienbar ist. Die Verknüpfung kann beispielsweise eine Funkverbindung sein, z.B. eine Internetverbindung oder eine Bluetooth-Verbindung.

Alternativ oder zusätzlich sind zur Lösung der genannten Aufgabe erfindungsgemäß die Merkmale des nebengeordneten, auf ein Verfahren gerichteten Anspruchs vorgesehen. Insbesondere wird somit zur Lösung der genannten Aufgabe bei einem Verfahren der eingangs beschriebenen Art vorgeschlagen, dass mittels einer Uhr des Getränkeautomaten ein Aktionszeitpunkt, zu dem von der Steuereinheit ein vordefinierter Programmablauf durchgeführt wird, bestimmt wird. Hierdurch kann der Betrieb des Getränkeautomaten verbessert werden, da in zeitlicher Hinsicht Programmabläufe besser geplant und/oder überwacht werden können.

"Bestimmt" bedeutet hierbei "vorgegeben" und/oder "gemessen".

Der Aktionszeitpunkt kann also einerseits vorgegeben werden. Dies kann beispielsweise dadurch erfolgen, dass der Aktionszeitpunkt absolut vorgegeben wird, also dass eine genaue Uhrzeit - und ggf. ein Datum - vorgegeben wird, zu der der Programmablauf durchgeführt wird. Der Aktionszeitpunkt kann aber auch relativ vorgegeben werden. Beispielsweise kann eine bestimmte Zeitspanne vorgegeben werden, nach deren Ablauf der Programmablauf durchgeführt werden soll.

Somit kann ein Benutzer des Verfahrens bzw. des Getränkeautomaten zeitlich genau festlegen, wann der gewünschte Programmablauf durchgeführt werden soll.

Der Aktionszeitpunkt kann andererseits auch gemessen werden. Dabei kann eine Messung ebenfalls absolut oder relativ erfolgen. Wird ein Aktionszeitpunkt absolut gemessen, dann wird die genaue Uhrzeit - und ggf. das Datum -, zu der der Programmablauf durchgeführt worden ist, gemessen. Es ist aber auch möglich, dass der Aktionszeitpunkt relativ gemessen wird, also dass ein zeitlicher Abstand zu einem vorangegangenen Aktionszeitpunkt gemessen wird.

Hierdurch kann ein Zustand des Getränkeautomaten, beispielsweise hinsichtlich einer Hygiene des Getränkeautomaten und/oder eines Verschleißes des Getränkeautomaten, beobachtet werden.

Der Programmablauf kann eine Folge von Verfahrensschritten umfassen. Beispielsweise kann der Programmablauf eine Reinigungsroutine umfassen, bei der der Getränkeautomat gereinigt und/oder entkalkt wird. Der Programmablauf kann aber auch eine Ausgabe eines Getränks umfassen, bei der der Benutzer des Getränkeautomaten ein Getränk, beispielsweise einen Kaffee, beziehen kann.

Die Uhr kann beispielsweise eine Echtzeituhr, also eine sogenannte "real time clock" (RTC), sein. Dadurch kann eine besonders genaue Messung der Uhrzeit ermöglicht werden. Die Uhr kann aber beispielsweise auch ein sogenannter Timer-IC sein. Hierdurch kann eine besonders kostengünstige Uhr realisiert sein.

Der Getränkeautomat ist bevorzugt ein Kaffeevollautomat. Besonders bevorzugt ist der Getränkeautomat wie oben oder unten beschrieben ausgestaltet. Dadurch können die beschriebenen Vorteile auch bei diesem Verfahren genutzt werden.

Bei einer vorteilhaften Ausführung kann vorgesehen sein, dass der Getränkeautomat dem Aktionszeitpunkt zeitlich vorgelagert in einem Pseudo-Aus-Zustand ist. Dadurch kann der Getränkeautomat besonders energiesparend betrieben werden.

Bei einer weiteren vorteilhaften Ausführung kann vorgesehen sein, dass von der Steuereinheit bei einem Startvorgang des Getränkeautomaten aus dem Pseudo-Aus-Zustand eine voreingestellte Reinigungsroutine übersprungen wird. Dadurch kann sichergestellt werden, dass der Getränkeautomat unmittelbar nach dem Startvorgang den vordefinierten Programmablauf - und nicht zunächst die voreingestellte Reinigungsroutine - durchführt.

Ohne diese Möglichkeit könnte sich, wenn beispielsweise der Programmablauf umfasst, dass ein Getränk ausgegeben wird, in einer bereitgestellten Tasse eine Spülflüssigkeit sammeln. Die Spülflüssigkeit wäre hierbei im Zuge der Reinigungsroutine von dem Getränkeautomaten ausgespült worden. Dies könnte jedoch die Qualität des Getränks beeinträchtigen. Somit kann es vorteilhaft sein, die voreingestellte Reinigungsroutine zu überspringen.

Alternativ oder zusätzlich wird die voreingestellte Reinigungsroutine von der Steuereinheit bei einem Startvorgang des Getränkeautomaten aus dem Pseudo-Aus-Zustand modifiziert. Die Reinigungsroutine kann hierbei so modifiziert werden, dass diese nicht mit dem vordefinierten Programmablauf kollidiert. Wenn also beispielsweise der Programmablauf umfasst, dass ein Getränk ausgegeben werden soll, dann kann die voreingestellte Reinigungsroutine derart modifiziert werden, dass eine Spülung des Getränkeautomaten unterlassen wird, damit keine Spülflüssigkeit in eine bereitgestellte Tasse gelangt. Hierdurch können die Reinigungsroutine und der Programmablauf aufeinander abgestimmt werden.

Bei einer weiteren vorteilhaften Ausführung kann vorgesehen sein, dass der vordefinierte Programmablauf umfasst, dass von dem Getränkeautomaten ein Getränk zubereitet wird. Dies kann beispielsweise die Zubereitung eines Kaffeegetränks sein.

Somit kann ein Benutzer den Aktionszeitpunkt vorgeben, zu dem er die Zubereitung eines Getränks wünscht, beispielsweise zu einer bestimmten Uhrzeit oder nach dem Ablauf einer gewissen Zeitspanne.

Andererseits kann hierdurch auch der Aktionszeitpunkt, zu dem das Getränk zubereitet wird, gemessen werden. Hierdurch kann beispielsweise festgestellt werden, wie groß ein Zeitabstand zwischen der Getränkezubereitung und einer vorangegangenen Getränkezubereitung und/oder einer vorangegangenen Reinigungsroutine ist. Diese Daten können sodann in der Steuereinheit ausgewertet werden.

Alternativ oder zusätzlich kann vorgesehen sein, dass von dem Getränkeautomaten ein Getränk ausgegeben wird. "Ausgegeben" bedeutet hierbei, dass das Getränk in einen breitgestellten Behälter, beispielsweise ein Glas oder eine Tasse, gegeben wird. Somit kann der Benutzer zu dem Aktionszeitpunkt das Getränk beziehen.

Bei einer weiteren vorteilhaften Ausführung kann vorgesehen sein, dass der vordefinierte Programmablauf umfasst, dass von der Steuereinheit ein Zeitabstand zu einem vorangegangenen Aktionszeitpunkt bestimmt wird. Beispielsweise kann der Zeitabstand zwischen zwei Getränkebezügen und/oder zwei Reinigungsvorgängen bestimmt werden, also gemessen und/oder vorgegeben werden.

Bevorzugt wird hierbei der Zeitabstand von der Steuereinheit mit einem in der Steuereinheit hinterlegten Referenzzeitabstand verglichen.

Beispielsweise kann ein Zeitabstand vorgegeben werden, der zwischen zwei Programmabläufen bestehen soll, die Reinigungsroutinen umfassen. In diesem Fall wird von der Steuereinheit eine Reinigungsroutine durchgeführt, sobald der Zeitabstand den Referenzzeitabstand überschreitet.

Es ist aber auch denkbar, dass ein Zeitabstand zwischen zwei Aktionszeitpunkten gemessen wird, wobei zu einem der Aktionszeitpunkte ein Programmablauf durchgeführt wurde, bei dem ein Getränk ausgegeben wurde, und wobei zu dem anderen der Aktionszeitpunkte ein Programmablauf durchgeführt wurde, bei dem eine Reinigungsroutine durchgeführt wurde. Der gemessene Zeitabstand kann in der Steuereinheit verglichen werden. In der Steuereinheit kann sodann überprüft werden, ob der Zeitabstand den Referenzzeitabstand überschreitet. Ist dies der Fall, kann umgehend eine Reinigungsroutine durchgeführt werden.

Alternativ oder zusätzlich wird bei einem Überschreiten des Referenzzeitabstand durch den Zeitabstand von der Steuereinheit eine Anzeige ausgegeben. Beispielsweise kann die Anzeige "Wasser auswechseln" ausgegeben werden, wenn zu befürchten ist, dass aufgrund der langen Standzeit das Wasser im Wasserbehälter nicht mehr den Hygieneanforderungen genügen kann. Es können auch andere Anzeige ausgegeben werden, beispielsweise "Entkalken" oder "Reinigen".

Die Anzeige kann beispielsweise auf einem Display des Getränkeautomaten ausgegeben werden. Die Anzeige kann aber beispielsweise auch auf einem mobilen Endgerät des Benutzers ausgegeben werden, das mit der Steuereinheit datentechnisch verknüpft ist. Dies kann die Bedienfreundlichkeit des Getränkeautomaten erhöhen.

Bei einer weiteren vorteilhaften Ausführung kann vorgesehen sein, dass der vordefinierte Programmablauf umfasst, dass eine Reinigungsroutine an dem Getränkeautomaten durchgeführt wird.

Somit kann ein Benutzer einen Aktionszeitpunkt so vorgeben, dass die Reinigungsroutine nicht in den normalen Betrieb des Getränkeautomaten eingreift. Beispielsweise kann als Aktionszeitpunkt ein Zeitpunkt in der Nacht vorgegeben werden.

Andererseits kann dies auch bedeuten, dass von der Uhr der jeweilige Aktionszeitpunkt gemessen wird, zu dem die Reinigungsroutine durchgeführt wird. Hierdurch kann übersichtlich festgehalten werden, in welchem Hygiene-Zustand sich der Getränkeautomaten befindet.

Bevorzugt gibt die Reinigungsroutine eine Flüssigkeit an einer Getränkeausgabe aus. Diese Flüssigkeit kann eine Spülflüssigkeit sein, beispielsweise Wasser, das Ablagerungen aus den Flüssigkeitsleitungen des Getränkeautomaten enthält und/oder ein Reinigungsmittel enthält. Hierdurch können die Leitungen des Getränkeautomaten gespült werden.

Bei einer weiteren vorteilhaften Ausführung kann vorgesehen sein, dass der Aktionszeitpunkt in der Steuereinheit gespeichert wird.

Dies kann eine spätere Datenauswertung von gespeicherten Aktionszeitpunkten ermöglichen, durch die beispielsweise auf den Zustand des Getränkeautomaten geschlossen werden kann, insbesondere auf den Verschleißzustand und/oder auf den Hygienezustand.

Zudem kann diese Ausgestaltung ermöglichen, dass ein Zeitabstand zwischen einem aktuell gemessenen Aktionszeitpunkt und einem vorangegangenen Aktionszeitpunkt ermittelt werden kann, der bevorzugt mit einem in der Steuereinheit hinterlegten Referenzzeitabstand verglichen werden kann.

Bei einer weiteren vorteilhaften Ausführung kann vorgesehen sein, dass die Steuereinheit über eine Kommunikationsschnittstelle mit einem mobilen Endgerät verknüpft wird.

Das mobile Endgerät kann beispielsweise ein Smartphone sein. Die Verknüpfung kann beispielsweise eine Funk-Verknüpfung sein, beispielsweise eine Internet- oder Bluetooth-Verknüpfung. Hierdurch kann auf eine Benutzerschnittstelle, beispielsweise ein Touchscreen, an dem Getränkeautomaten verzichtet werden, da die Interaktion des Benutzers mit der Steuereinheit über dessen mobiles Endgerät erfolgen kann. Dies kann die Herstellkosten des Getränkeautomaten reduzieren.

Bei einer weiteren vorteilhaften Ausführung kann vorgesehen sein, dass die Uhr über einen Kondensator elektrisch versorgt wird. Hierdurch kann sichergestellt werden, dass von der Uhr stets die genaue Uhrzeit gemessen werden kann, auch wenn der Getränkeautomaten ausgeschaltet ist oder sich in einem Pseudo-Aus-Zustand befindet.

Bevorzugt stellt die Steuereinheit eine Versorgungsspannung her, wenn der Kondensator aufgeladen werden muss. Somit kann, wenn der Getränkeautomaten eingeschaltet ist, der Kondensator bei Bedarf aufgeladen werden, um eine beständige Energieversorgung der Uhr zu gewährleisten.

Alternativ oder zusätzlich stellt die Steuereinheit eine Versorgungsspannung her, um den Kondensator aufzuladen. Dadurch kann der Kondensator während eines Betriebs des Getränkeautomaten aufgeladen werden.

Die Erfindung wird nun anhand von Ausführungsbeispielen näher beschrieben, ist jedoch nicht auf diese Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele.

Es zeigt:
- Figur 1: einen erfindungsgemäßen Getränkeautomaten, der mit einem erfindungsgemäßen Verfahren betrieben wird,
- Figur 2: einen Ausschnitt eines erfindungsgemäßen Verfahrens,
- Figur 3: eine Detailansicht der Steuereinheit des Getränkeautomaten aus Figur 1 und
- Figur 4: den Getränkeautomaten aus Figur 1, bei dem ein anderer Programmablauf, der eine Reinigungsroutine umfasst, durchgeführt wird.

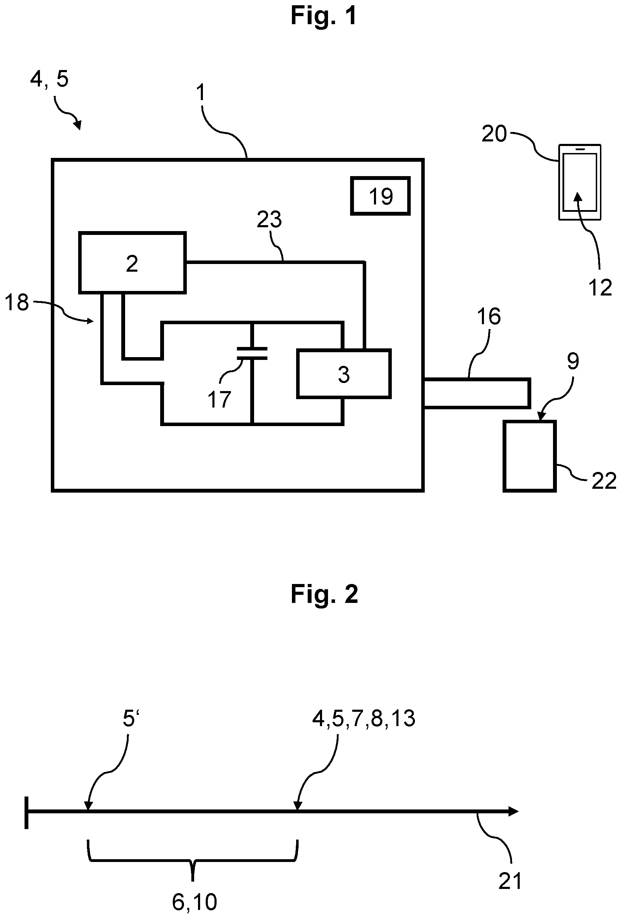

In Figur 1 ist ein Getränkeautomat 1 zu sehen, der ein Kaffeevollautomat ist. Der Getränkeautomat 1 verfügt über eine Steuereinheit 2 und eine Uhr 3. Die Uhr 3 ist als Echtzeituhr ausgebildet, wodurch stets eine genaue Zeitmessung ermöglicht ist.

Die Steuereinheit 2 und die Uhr 3 sind signalübertragend über ein Kabel 23 verbunden.

Die Steuereinheit 2 ist dazu eingerichtet, einen vordefinierten Programmablauf 4 durchzuführen. Der vordefinierten Programmablauf 4 ist in diesem Ausführungsbeispiel die Ausgabe eines Getränks 9. Das Getränk 9 wird hierbei in eine Tasse 22 gegeben, welche unter einer Getränkeausgabe 16 des Getränkeautomaten 1 bereitsteht.

Figur 1 zeigt den Getränkeautomaten 1 zu einem Aktionszeitpunkt 5, zu dem dieser vordefinierte Programmablauf 4 durchgeführt wird. Dabei ist der Aktionszeitpunkt 5 über die Uhr 3 bestimmt, also vorgegeben worden.

Der Getränkeautomat 1 weist eine Kommunikationsschnittstelle 19 auf. Über die Kommunikationsschnittstelle 19 ist mit der Steuereinheit 2 ein mobiles Endgerät 20 eines Benutzers, welches ein Smartphone ist, verbunden. Auf dem mobilen Endgerät 20 kann die Steuereinheit 2 somit Anzeigen 12 ausgeben. Das mobile Endgerät 20 ist mit der Kommunikationsschnittstelle 19 über eine Internet-Verbindung verbunden. Somit benötigt der Getränkeautomat 1 keine eigene Benutzerschnittstelle, beispielsweise in Form eines Touchscreens, wodurch die Herstellkosten des Getränkeautomaten 1 reduziert werden konnten.

Über sein mobiles Endgerät 20 hat der Benutzer in die Steuereinheit die Uhrzeit, also den Aktionszeitpunkt 5, eingegeben, zu der das Getränk 9 zubereitet und ausgegeben werden soll. Diese Uhrzeit ist in diesem Ausführungsbeispiel 6:30 Uhr. Die Uhr 3 hat also um diese Uhrzeit ein Signal an die Steuereinheit 2 gegeben, von der sodann der Programmablauf 4 durchgeführt worden ist.

Der Getränkeautomat 1 weist weiter einen Kondensator 17 auf, mit dem die Uhr 3 elektrisch versorgbar ist. Da sich der Getränkeautomat 1 hier in einem eingeschalteten Zustand befindet, wird die Uhr 3 zu dem aktuellen, gezeigten Aktionszeitpunkt 5 über eine Versorgungsspannung 18 versorgt, welche von der Steuereinheit 2 hergestellt wird. Durch diese Versorgungsspannung 18 wird gleichzeitig auch der Kondensator 17 aufgeladen. Somit kann, sobald sich der Getränkeautomat 1 in einem Pseudo-Aus-Zustand befindet, bei dem der Getränkeautomat 1 energiesparend betrieben wird und die Versorgungsspannung 18 nicht mehr vorhanden ist, die Uhr 3 weiterhin über den Kondensator 17 versorgt werden.

In Figur 2 ist eine Zeitachse 21 zu sehen, auf der verschiedene Schritte des erfindungsgemäßen Verfahrens aufgetragen sind. Die Ereignisse betreffen den Getränkeautomaten 1 aus Figur 1, wobei Figur 1 den Getränkeautomaten zum Aktionszeitpunkt 5 zeigt. Zu diesem Aktionszeitpunkt 5 wird der vordefinierte Programmablauf 4 durchgeführt, welcher die Ausgabe des Getränks 9 (siehe Figur 1) umfasst.

Wie in Figur 2 zu erkennen ist, ist der Getränkeautomat 1 dem Aktionszeitpunkt 5 zeitlich vorgelagert in einem Pseudo-Aus-Zustand 6. Das bedeutet, dass sich der Getränkeautomaten 1 in einem energiesparenden Modus befunden hat, bevor das Getränk zum Aktionszeitpunkt 5 ausgegeben wurde.

Um den Programmablauf 4 durchzuführen, ist es also notwendig gewesen, einen Startvorgang 7 des Getränkeautomaten 1 aus dem Pseudo-Aus-Zustand 6 durchzuführen. Diesen Startvorgang 7 hat die Uhr 3 initiiert, indem von der Uhr 3 ein Signal über das Kabel 23 an die Steuereinheit 2 gegeben wurde. Infolge dieses Startvorgangs 7 wurde, bevor der Programmablauf 4 durchgeführt wurde, eine voreingestellte Standardroutine 8 durchgeführt.

Die Standardroutine 8 hat hierbei eine Reinigung des Getränkeautomaten 1 umfasst. Die Standardroutine 8 ist jedoch von der Steuereinheit 2 dahingehend modifiziert worden, dass eine Spülung des Getränkeautomaten 1 unterdrückt wird. Ohne diese Modifikation wäre in die Tasse 22 (siehe Figur 1) nämlich nicht nur das Getränk 9 gelangt, sondern auch eine ausgespülte Flüssigkeit, die mit Ablagerungen aus den Leitungen des Getränkeautomaten 1 und einem Reinigungsmittel versehen wäre. Um dies zu vermeiden, ist also die Standardroutine 8 modifiziert worden. Es wäre allerdings auch möglich gewesen, die Standardroutine 8 komplett zu überspringen.

Wie in Figur 2 zu sehen ist, umfasst der Programmablauf 4, dass ein Zeitabstand 10 zu einem vorangegangenen Aktionszeitpunkt 5' bestimmt, also gemessen wird.

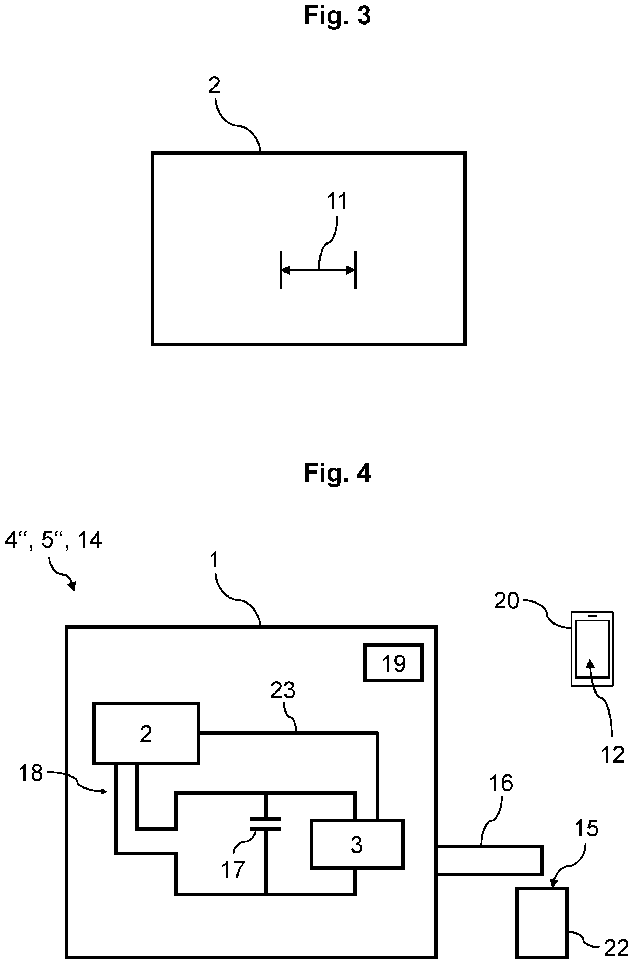

Dieser Zeitabstand 10 wird sodann mit einem Referenzzeitabstand 11, der in der Steuereinheit 2 hinterlegt ist, siehe Figur 3, verglichen. Da der Zeitabstand 10 den Referenzzeitabstand 11 überschreitet, wird an dem mobilen Endgerät 20 eine Anzeige 12 ausgegeben (siehe Figur 1). Die Anzeige 12 fordert hierbei den Benutzer dazu auf, dass in einem Wasserbehälter des Getränkeautomaten 1 befindliche Wasser auszuwechseln. Dies war nämlich zuletzt am vorangegangenen Aktionszeitpunkt 5` geschehen und ist längst überfällig.

Zudem wird wegen des Vergleichsergebnisses, aus dem hervorgeht, dass der Zeitabstand 10 den Referenzzeitabstand 11 überschreitet, eine Aktion 13 von der Steuereinheit 2 ausgelöst. Die Aktion 13 ist in diesem Beispiel eine Durchspülung des Getränkeautomaten 1.

Weiter wird der Aktionszeitpunkt 5 in der Steuereinheit 2 gespeichert, damit auch an dem nächstfolgenden Aktionszeitpunkt (nicht gezeigt) ein Zeitabstand von diesem Aktionszeitpunkt zu dem aktuellen Aktionszeitpunkt 5 gemessen werden kann.

In Figur 4 ist der Getränkeautomat 1 aus Figur 1 zu sehen, jedoch zu einem anderen Aktionszeitpunkt 5". Zu diesem Aktionszeitpunkt 5" wird ein Programmablauf 4" durchgeführt, bei dem eine Reinigungsroutine 14 an dem Getränkeautomaten 1 durchgeführt wird.

Hinsichtlich des Aufbaus des Getränkeautomaten 1 und der Verknüpfung des Getränkeautomaten 1 mit dem mobilen Endgerät 20 wird auf die Beschreibung zu Figur 1 verwiesen.

In Figur 4 sind Unterschiede zu Figur 1 zu sehen: An der Getränkeausgabe 16 wird nicht ein Getränk, sondern eine Flüssigkeit 15 in die Tasse 22 abgegeben. Dies hängt damit zusammen, dass infolge der Reinigungsroutine 14 die Flüssigkeitsleitungen innerhalb des Getränkeautomaten 1 gespült worden sind. Die Flüssigkeit 15, welche Wasser, Ablagerungen aus den Leitungen sowie ein Reinigungsmittel umfasst, wird zum Abschluss der Reinigungsroutine 14 an der Getränkeausgabe 16 aus dem Getränkeautomaten 1 herausgespült. Im Anschluss wird auf dem mobilen Endgerät 20 von der Steuereinheit 2 eine Anzeige 12 ausgegeben, aus der hervorgeht, dass die Reinigungsroutine 14 beendet ist.

Zudem wird der Aktionszeitpunkt 5" von der Uhr 3 des Getränkeautomaten 1 bestimmt, also gemessen. Weiter umfasst der Programmablauf 4", dass der Aktionszeitpunkt 5" in der Steuereinheit 2 gespeichert wird. Dazu wird die aktuelle Uhrzeit, also der Aktionszeitpunkt 5", von der Uhr 3 über das Kabel 23 an die Steuereinheit 2 gegeben, in der der Aktionszeitpunkt 5" sodann gespeichert wird.

Im Anschluss kann - ausgehend von dem gespeicherten Aktionszeitpunkt 5" - von der Steuereinheit 2 ein in der Zukunft liegender Aktionszeitpunkt (nicht gezeigt) berechnet werden, also bestimmt werden, zu dem wieder die Reinigungsroutine 14 durchzuführen ist. Dieser in der Zukunft liegende Aktionszeitpunkt wird sodann über das Kabel 23 an die Uhr 3 gegeben. Die Uhr 3 wird, sobald der in der Zukunft liegende Aktionszeitpunkt erreicht ist, ein entsprechendes Signal an die Steuereinheit 2 geben, welche dann wieder den Programmablauf 4" durchführen wird.

Die Erfindung betrifft insbesondere einen Getränkeautomaten 1, der eine Steuereinheit 2 und eine Uhr 3 aufweist, die signalübertragend miteinander verbunden sind. Über die Uhr 3 ist ein Aktionszeitpunkt 5 bestimmbar, zu dem die Steuereinheit 2 einen vordefinierten Programmablauf 4 durchführt.

### Bezugszeichenliste

- 1: Getränkeautomat
- 2: Steuereinheit
- 3: Uhr
- 4: Programmablauf
- 4": Weiterer Programmablauf (zu weiterem Aktionszeitpunkt 5")
- 5: Aktionszeitpunkt
- 5': Vorangegangener Aktionszeitpunkt
- 5": Weiterer Aktionszeitpunkt
- 6: Pseudo-Aus-Zustand
- 7: Startvorgang
- 8: Standardroutine
- 9: Getränk
- 10: Zeitabstand
- 11: Referenzzeitabstand
- 12: Anzeige
- 13: Aktion
- 14: Reinigungsroutine
- 15: Flüssigkeit
- 16: Getränkeausgabe
- 17: Kondensator
- 18: Versorgungsspannung
- 19: Kommunikationsschnittstelle
- 20: Mobiles Endgerät
- 21: Zeitachse
- 22: Tasse
- 23: Kabel

## Patentansprüche

1. Getränkeautomat (1), insbesondere Kaffeevollautomat, mit einer Steuereinheit (2), die dazu eingerichtet ist, einen vordefinierten Programmablauf (4) durchzuführen, und mit einer Uhr (3), die mit der Steuereinheit (2) signalübertragend verbunden ist, **dadurch gekennzeichnet, dass** über die Uhr (3) ein Aktionszeitpunkt (5), zu dem die Steuereinheit (2) den vordefinierten Programmablauf (4) durchführt, bestimmbar ist.

2. Getränkeautomat (1) nach dem vorangehenden Anspruch, **dadurch gekennzeichnet, dass** der Getränkeautomat (1) dem Aktionszeitpunkt (5) zeitlich vorgelagert in einem Pseudo-Aus-Zustand (6) ist, insbesondere wobei der vordefinierte Programmablauf (4) in dem Pseudo-Aus-Zustand (6) nicht vollständig ausführbar ist.

3. Getränkeautomat (1) nach dem vorangehenden Anspruch, **dadurch gekennzeichnet, dass** die Steuereinheit (2) dazu eingerichtet ist, bei einem Startvorgang (7) des Getränkeautomaten (1) aus dem Pseudo-Aus-Zustand (6) eine voreingestellte Standardroutine (8) zu überspringen oder zu modifizieren.

4. Getränkeautomat (1) nach einem der beiden vorangehenden Ansprüche, **dadurch gekennzeichnet, dass** ein unmittelbar nach einem oder dem Startvorgang (7) des Getränkeautomaten (1) aus dem Pseudo-Aus-Zustand (6) durchzuführender Programmablauf (4) vordefinierbar, insbesondere modifizierbar oder deaktivierbar, ist.

5. Getränkeautomat nach einem der vorangehenden Ansprüche, **dadurch gekennzeichnet, dass** der vordefinierte Programmablauf (4) umfasst, ein Getränk (9) zuzubereiten und/oder auszugeben.

6. Getränkeautomat (1) nach einem der vorangehenden Ansprüche, **dadurch gekennzeichnet, dass** der vordefinierte Programmablauf (4) umfasst, einen Zeitabstand (10) zu einem vorangegangenen Aktionszeitpunkt (5) zu bestimmen, insbesondere wobei der Zeitabstand (10) von der Steuereinheit (2) mit einem in der Steuereinheit (2) hinterlegten Referenzzeitabstand (11) verglichen wird und/oder bei einem Überschreiten des oder eines Referenzzeitabstands (11) durch den Zeitabstand (10) von der Steuereinheit (2) eine Anzeige (12) ausgegeben und/oder eine Aktion (13) ausgelöst wird.

7. Getränkeautomat (1) nach einem der vorangehenden Ansprüche, **dadurch gekennzeichnet, dass** der vordefinierte Programmablauf (4) umfasst, eine Reinigungsroutine (14) an dem Getränkeautomaten (1) durchzuführen, insbesondere wobei die Reinigungsroutine (14) eine Abgabe einer Flüssigkeit (15) an einer Getränkeausgabe (16) bewirkt.

8. Getränkeautomat (1) nach einem der vorangehenden Ansprüche, **dadurch gekennzeichnet, dass** der vordefinierte Programmablauf (4) umfasst, den Aktionszeitpunkt (5) in der Steuereinheit (2) zu speichern.

9. Getränkeautomat (1) nach einem der vorangehenden Ansprüche, **dadurch gekennzeichnet, dass** die Uhr (3) über einen Kondensator (17) elektrisch versorgbar ist, insbesondere wobei die Steuereinheit (2) zu einer Herstellung einer Versorgungsspannung (18) eingerichtet ist, um den Kondensator (17) aufzuladen.

10. Getränkeautomat (1) nach einem der vorangehenden Ansprüche, **dadurch gekennzeichnet, dass** der Getränkeautomat (1) eine Kommunikationsschnittstelle (19) aufweist, über die die Steuereinheit (20) mit einem mobilen Endgerät (20) datentechnisch verknüpfbar ist.

11. Verfahren zum Betreiben eines Getränkeautomaten (1), insbesondere Kaffeevollautomaten, insbesondere nach einem der vorangehenden Ansprüche, **dadurch gekennzeichnet, dass** mittels einer Uhr (3) des Getränkeautomaten (1) ein Aktionszeitpunkt (5), zu dem von der Steuereinheit (2) ein vordefinierter Programmablauf (4) durchgeführt wird, bestimmt wird.

12. Verfahren nach dem vorangehenden Anspruch, **dadurch gekennzeichnet, dass** der Getränkeautomat (1) dem Aktionszeitpunkt (5) zeitlich vorgelagert in einem Pseudo-Aus-Zustand (6) ist.

13. Verfahren nach dem vorangehenden Anspruch, **dadurch gekennzeichnet, dass** von der Steuereinheit (2) bei einem Startvorgang (7) des Getränkeautomaten (1) aus dem Pseudo-Aus-Zustand (6) eine voreingestellte Reinigungsroutine (14) übersprungen und/oder modifiziert wird.

14. Verfahren nach einem der vorangehenden Verfahrensansprüche, **dadurch gekennzeichnet, dass** der vordefinierte Programmablauf (4) umfasst, dass von dem Getränkeautomaten (1) ein Getränk (9) zubereitet und/oder ausgegeben wird.

15. Verfahren nach einem der vorangehenden Verfahrensansprüche, **dadurch gekennzeichnet, dass** der vordefinierte Programmablauf (4) umfasst, dass von der Steuereinheit (2) ein Zeitabstand (10) zu einem vorangegangenen Aktionszeitpunkt (5) bestimmt wird, insbesondere wobei der Zeitabstand (10) von der Steuereinheit (2) mit einem in der Steuereinheit (2) hinterlegten Referenzzeitabstand (11) verglichen wird und/oder bei einem Überschreiten des Referenzzeitabstands (11) durch den Zeitabstand (10) von der Steuereinheit (2) eine Anzeige (12) ausgegeben und/oder eine Aktion ausgelöst wird.

16. Verfahren nach einem der vorangehenden Verfahrensansprüche, **dadurch gekennzeichnet, dass** der vordefinierte Programmablauf (4) umfasst, dass eine Reinigungsroutine (14) an dem Getränkeautomaten (1) durchgeführt wird, insbesondere wobei die Reinigungsroutine (14) eine Flüssigkeit (15) an einer Getränkeausgabe (16) ausgibt.

17. Verfahren nach einem der vorangehenden Verfahrensansprüche, **dadurch gekennzeichnet, dass** der Aktionszeitpunkt (5) in der Steuereinheit (2) gespeichert wird.

18. Verfahren nach einem der vorangehenden Verfahrensansprüche, **dadurch gekennzeichnet, dass** die Steuereinheit (2) über eine Kommunikationsschnittstelle (19) mit einem mobilen Endgerät (20) verknüpft wird.

19. Verfahren nach einem der vorangehenden Ansprüche, **dadurch gekennzeichnet, dass** die Uhr (3) über einen Kondensator (17) elektrisch versorgt wird, insbesondere wobei die Steuereinheit (2) eine Versorgungsspannung (18) herstellt, wenn der Kondensator (17) aufgeladen werden muss und/oder um den Kondensator (17) aufzuladen.

## Geänderte Patentansprüche

### Geänderte Patentansprüche gemäss Regel 137(2) EPÜ.

1. Getränkeautomat (1), insbesondere Kaffeevollautomat, mit einer Steuereinheit (2), die dazu eingerichtet ist, einen vordefinierten Programmablauf (4) durchzuführen, und mit einer Uhr (3), die mit der Steuereinheit (2) signalübertragend verbunden ist, wobei über die Uhr (3) ein Aktionszeitpunkt (5), zu dem die Steuereinheit (2) den vordefinierten Programmablauf (4) durchführt, bestimmbar ist, **dadurch gekennzeichnet, dass** der Getränkeautomat (1) dem Aktionszeitpunkt (5) zeitlich vorgelagert in einem Pseudo-Aus-Zustand (6) ist, wobei die Steuereinheit (2) dazu eingerichtet ist, bei einem Startvorgang (7) des Getränkeautomaten (1) aus dem Pseudo-Aus-Zustand (6) eine voreingestellte Standardroutine (8) zu überspringen oder zu modifizieren, und wobei der vordefinierte Programmablauf (4) umfasst, ein Getränk (9) zuzubereiten und/oder auszugeben.

2. Getränkeautomat (1) nach dem vorangehenden Anspruch, **dadurch gekennzeichnet, dass** der vordefinierte Programmablauf (4) in dem Pseudo-Aus-Zustand (6) nicht vollständig ausführbar ist.

3. Getränkeautomat (1) nach einem der beiden vorangehenden Ansprüche, **dadurch gekennzeichnet, dass** ein unmittelbar nach einem oder dem Startvorgang (7) des Getränkeautomaten (1) aus dem Pseudo-Aus-Zustand (6) durchzuführender Programmablauf (4) vordefinierbar, insbesondere modifizierbar oder deaktivierbar, ist.

4. Getränkeautomat (1) nach einem der vorangehenden Ansprüche, **dadurch gekennzeichnet, dass** der vordefinierte Programmablauf (4) umfasst, einen Zeitabstand (10) zu einem vorangegangenen Aktionszeitpunkt (5) zu bestimmen, insbesondere wobei der Zeitabstand (10) von der Steuereinheit (2) mit einem in der Steuereinheit (2) hinterlegten Referenzzeitabstand (11) verglichen wird und/oder bei einem Überschreiten des oder eines Referenzzeitabstands (11) durch den Zeitabstand (10) von der Steuereinheit (2) eine Anzeige (12) ausgegeben und/oder eine Aktion (13) ausgelöst wird.

5. Getränkeautomat (1) nach einem der vorangehenden Ansprüche, **dadurch gekennzeichnet, dass** der vordefinierte Programmablauf (4) umfasst, eine Reinigungsroutine (14) an dem Getränkeautomaten (1) durchzuführen, insbesondere wobei die Reinigungsroutine (14) eine Abgabe einer Flüssigkeit (15) an einer Getränkeausgabe (16) bewirkt.

6. Getränkeautomat (1) nach einem der vorangehenden Ansprüche, **dadurch gekennzeichnet, dass** der vordefinierte Programmablauf (4) umfasst, den Aktionszeitpunkt (5) in der Steuereinheit (2) zu speichern.

7. Getränkeautomat (1) nach einem der vorangehenden Ansprüche, **dadurch gekennzeichnet, dass** die Uhr (3) über einen Kondensator (17) elektrisch versorgbar ist, insbesondere wobei die Steuereinheit (2) zu einer Herstellung einer Versorgungsspannung (18) eingerichtet ist, um den Kondensator (17) aufzuladen.

8. Getränkeautomat (1) nach einem der vorangehenden Ansprüche, **dadurch gekennzeichnet, dass** der Getränkeautomat (1) eine Kommunikationsschnittstelle (19) aufweist, über die die Steuereinheit (20) mit einem mobilen Endgerät (20) datentechnisch verknüpfbar ist.

9. Verfahren zum Betreiben eines Getränkeautomaten (1), insbesondere Kaffeevollautomaten, insbesondere nach einem der vorangehenden Ansprüche, wobei mittels einer Uhr (3) des Getränkeautomaten (1) ein Aktionszeitpunkt (5), zu dem von der Steuereinheit (2) ein vordefinierter Programmablauf (4) durchgeführt wird, bestimmt wird, **dadurch gekennzeichnet, dass** der Getränkeautomat (1) dem Aktionszeitpunkt (5) zeitlich vorgelagert in einem Pseudo-Aus-Zustand (6) ist, wobei von der Steuereinheit (2) bei einem Startvorgang (7) des Getränkeautomaten (1) aus dem Pseudo-Aus-Zustand (6) eine voreingestellte Reinigungsroutine (14) übersprungen und/oder modifiziert wird und wobei der vordefinierte Programmablauf (4) umfasst, dass von dem Getränkeautomaten (1) ein Getränk (9) zubereitet und/oder ausgegeben wird.

10. Verfahren nach dem vorangehenden Anspruch, **dadurch gekennzeichnet, dass** der vordefinierte Programmablauf (4) umfasst, dass von der Steuereinheit (2) ein Zeitabstand (10) zu einem vorangegangenen Aktionszeitpunkt (5) bestimmt wird, insbesondere wobei der Zeitabstand (10) von der Steuereinheit (2) mit einem in der Steuereinheit (2) hinterlegten Referenzzeitabstand (11) verglichen wird und/oder bei einem Überschreiten des Referenzzeitabstands (11) durch den Zeitabstand (10) von der Steuereinheit (2) eine Anzeige (12) ausgegeben und/oder eine Aktion ausgelöst wird.

11. Verfahren nach einem der vorangehenden Verfahrensansprüche, **dadurch gekennzeichnet, dass** der vordefinierte Programmablauf (4) umfasst, dass eine Reinigungsroutine (14) an dem Getränkeautomaten (1) durchgeführt wird, insbesondere wobei die Reinigungsroutine (14) eine Flüssigkeit (15) an einer Getränkeausgabe (16) ausgibt.

12. Verfahren nach einem der vorangehenden Verfahrensansprüche, **dadurch gekennzeichnet, dass** der Aktionszeitpunkt (5) in der Steuereinheit (2) gespeichert wird.

13. Verfahren nach einem der vorangehenden Verfahrensansprüche, **dadurch gekennzeichnet, dass** die Steuereinheit (2) über eine Kommunikationsschnittstelle (19) mit einem mobilen Endgerät (20) verknüpft wird.

14. Verfahren nach einem der vorangehenden Ansprüche, **dadurch gekennzeichnet, dass** die Uhr (3) über einen Kondensator (17) elektrisch versorgt wird, insbesondere wobei die Steuereinheit (2) eine Versorgungsspannung (18) herstellt, wenn der Kondensator (17) aufgeladen werden muss und/oder um den Kondensator (17) aufzuladen.
